# EUROPEAN PATENT SPECIFICATION

(11) **EP 4 405 767 B1**
(45) Date of publication and mention of the grant of the patent: **12.11.2025**
(21) Application number: 22783065.0
(22) Date of filing: 16.09.2022
(51) Int. Cl.: G05D 1/00

(54) **METHOD AND CONTROL NODE FOR ASSISTED VEHICLE CONTROL IN A MINING ENVIRONMENT**
VERFAHREN UND STEUERKNOTEN ZUR UNTERSTÜTZTEN FAHRZEUGSTEUERUNG IN EINER BERGBAUUMGEBUNG
PROCÉDÉ ET NOEUD DE COMMANDE POUR COMMANDE ASSISTÉE DE VÉHICULE DANS UN ENVIRONNEMENT MINIER

(30) Priority: 23.09.2021 SE 2151165
(43) Date of publication of application: 31.07.2024
(73) Proprietor: Epiroc Rock Drills Aktiebolag, 701 91 Örebro (SE)
(72) Inventor: LANDMARK, Nicklas, 719 30 Vintrosa (SE); ÖKVIST, Andreas, 711 91 Lindesberg (SE); KALANDER, Jan, 702 18 Örebro (SE); KODZAGA, Ermin, 703 41 Örebro (SE)
(74) Representative: Epiroc Rock Drills AB
(86) International application number: PCT/SE2022/050814
(87) International publication number: WO 2023/048615

(56) References cited:
- WO-A1-2019/199878
- JP-B2- 6 580 982
- US-A- 5 550 758
- US-A1- 2017 123 428
- US-A1- 2017 248 963
- US-A1- 2021 272 046
- US-B1- 8 340 902

## Description

### TECHNICAL FIELD

Embodiments herein relate to a method and a control node for assisted controlling of a vehicle in a mining environment. Furthermore, a computer program is also provided herein.

### BACKGROUND

In a typical mining environment, many different vehicles operate, such as underground loaders, mining rigs, trucks or other mining equipment. To improve the safety of operating these vehicles, it is common to remotely control these vehicles, also referred to as a tele-remote operation. In this way, the operator of a vehicle can be safely located outside of the mining environment. Furthermore, efficiency of operating vehicles in the mining environment is also improved as the operator can easily switch between which vehicles to operate in the mining environment depending on what task needs to be performed at the moment.

When remotely operating vehicles within a mining environment, there are however several problems to overcome. Typically, these vehicles are big and operate in narrow tunnels, and hence, the visibility is typically poor, and the space for maneuvering a vehicle is small. The visibility in narrow tunnels can further be limited due to dust fog and poor lighting. When operating vehicles remotely, the operator's vision is made up of a few sets of input data. For example, the operator has video feedback from cameras of a vehicle that the operator is currently controlling. These cameras give a point-of-view from the position of the vehicle such that the operator may observe the mining environment from the front or rear perspective of the vehicle. The operator may also have access to, in a separate view, sensor data of a 2D Light Detection and Ranging (Lidar) sensor. The Lidar sensor scans the environment surrounding a vehicle and provides to the operator a scanned map of the environment. The Lidar sensor data and the video feedback from the camera are both observed when driving the vehicle to ensure that the vehicle does not collide with its surroundings.

Furthermore, the operator may have a global map of the mining environment comprising the current position of the vehicle. This information needs to be periodically looked up, e.g. for planning a route for the vehicle, and for determining where in the mining environment the vehicle presently is located.

There may also be various display areas and/or lists for different dynamic information of the mining environment. For example, the operator may in one view, be able to look up positions of barriers, e.g., light barriers or geo fences, in the global map, and further gain information of their status. Barriers, such as light barriers and geo fences as used herein may be physical or virtual indicators of where the vehicle is allowed to operate within the mining environment. Barriers may be used for two purposes, first as an outer perimeter of an automated production area to ensure that humans and autonomous and/or tele remote controlled machines are always separated. The barriers may also function as dividers of the automated production area into smaller zones supporting traffic management of the automated fleet of machines in the different zones. Barriers may further differ in formal classifications, e.g. wherein a light barrier is a safety classified function and wherein a geo fence is not safety classified. The status and location of barriers may thus be needed to be looked up periodically to know how to plan a route and to know where it is possible to drive the vehicle. Furthermore, the operator may, using another view, look up which other vehicles are operating in the mining environment. For safety reasons, there may be restrictions in allowing vehicles to operate in the same zone concurrently, and hence, the operator needs to look up the positions of the other vehicles in the mining environment. The operator may further need to look up other information periodically, e.g. location and status of traffic lights position or road signs.

When looking up any of the above-mentioned information, this causes the operator to switch focus between views and/or display, which undoubtedly limits the drivers' capability of driving and operating the vehicle. Switching focus during a look up activity to obtain information necessary for operating the vehicle affects the efficiency of controlling the vehicle in a negative way. In a best case scenario, it may be possible to operate the vehicle safely at a slower speed than compared with when not having to switch focus. In worse cases, it may be necessary to stop the vehicle to avoid potential accidents while looking up the necessary information for operating the vehicle.

Consequently, the operator needs to control the vehicle based on the information from a multitude of information sources, which leads to a complex control process of the vehicle wherein the efficiency of controlling the vehicle is reduced.

WO 2019/199878 A1 discloses an autonomous vehicle management system configured to receive sensor data from one or more sensors associated with an autonomous vehicle and to generate and keep updated an internal map for the autonomous vehicle based on this sensor data. The internal map includes information representative of the autonomous vehicle's state of the autonomous vehicle's environment.

US 8 340 902 B1 discloses a remote vehicle management system by video radar including a camera array installed on the vehicle to capture and generate video data, video recognition units receiving the video data and converting into an object data stream, a vehicle database including static and dynamic data and an environment management unit generating a video radar data stream based on the object data stream.

### SUMMARY

An object of embodiments herein is to enable an improved remote control of vehicles in mining environments.

According to an aspect, the object is achieved by a method for controlling of a first vehicle in a mining environment according to claim 1. The method comprises obtaining positioning information. The positioning information comprises a geolocation representation of the mining environment and a position of the first vehicle in the mining environment. The method further comprises obtaining dynamic traffic information based on the position of the first vehicle. The dynamic traffic information is obtained from a server. The dynamic traffic information indicates respective positions of one or more dynamic objects in the mining environment. The method further comprises obtaining sensor data from one or more sensors associated with the first vehicle. The method further comprises producing a merged representation of the mining environment based on the obtained positioning information, the obtained dynamic traffic information, and the obtained sensor data. The merged representation provides continuous assistance for controlling the first vehicle in the mining environment by comprising at least part of the obtained sensor data, a respective position of at least one of the one or more dynamic objects when present in an area of the mining environment, at least part of the geolocation representation of the mining environment and the position of the first vehicle in the mining environment, and an indication of at least one vehicle route in the mining environment.

According to another aspect, the object is achieved by a control node configured to assist in controlling a first vehicle in a mining environment according to claim 14. The control node is further configured to obtain positioning information. The positioning information comprises a geolocation representation of the mining environment, and a position of the first vehicle in the mining environment. The control node is further configured to obtain dynamic traffic information based on the position of the first vehicle. The dynamic traffic information is obtained from a server. The dynamic traffic information indicates respective positions of one or more dynamic objects in the mining environment. The control node is further configured to obtain sensor data from one or more sensors associated with the first vehicle. The control node is further configured to produce a merged representation of the mining environment based on the obtained positioning information, the obtained dynamic traffic information, and the obtained sensor data. The merged representation of the mining environment provides continuous assistance for controlling the first vehicle in the mining environment by comprising at least part of the obtained sensor data, a respective position of at least one of the one or more dynamic objects when present in an area of the mining environment, at least part of the geolocation representation of the mining environment and the position of the first vehicle in the mining environment, and an indication of at least one vehicle route in the mining environment.

It is furthermore provided herein a computer program according to claim 15 comprising instructions, which, when executed on at least one processor, cause the at least one processor to carry out the method above. Additionally described but out of scope of the claims is a carrier comprising the computer program. The carrier is one of an electronic signal, an optical signal, an electromagnetic signal, a magnetic signal, an electric signal, a radio signal, a microwave signal, or a computer-readable storage medium.

Since the merged representation of the mining environment provides continuous assistance for controlling the first vehicle in the mining environment, the merged representation enables an improved and unified representation of information which is otherwise not provided for when an operator operates the first vehicle on-site. In this way, safer and more efficient remote control of the first vehicle in the mining environment is enabled. In particular, the merged representation allows for dynamic objects, when present in an area of the mining environment, to be represented with the at least part of the obtained sensor data, the at least part of the geolocation representation of the mining environment, and the position of the first vehicle in the mining environment, together with the indication of the at least one vehicle route. This improves contextual awareness of a traffic situation in the mining environment and thereby enables remote control of the first vehicle in a more safe and efficient manner. Furthermore, by using the merged representation, it is possible to operate the first vehicle remotely without having to shift focus to look up where in mining environment the first vehicle is located, what sensor data currently is obtained, where the dynamic objects are located relative the first vehicle in the mining environment, or where the at least one vehicle route is located. In this way, the safety and efficiency of remotely controlling the first vehicle in the mining environment is further improved.

### BRIEF DESCRIPTION OF THE DRAWINGS

Examples of embodiments herein are described in more detail with reference to attached drawings in which:
- **Fig. 1**: is a schematic block diagram illustrating a scenario according to embodiments herein.
- **Fig. 2**: is a schematic block diagram illustrating a scenario according to embodiments herein.
- **Fig. 3**: is a flowchart depicting a method according to embodiments herein.
- **Figs. 4a-b**: are schematic block diagrams illustrating embodiments herein.
- **Figs. 5a-b**: are schematic block diagrams illustrating embodiments of a control node.

### DETAILED DESCRIPTION

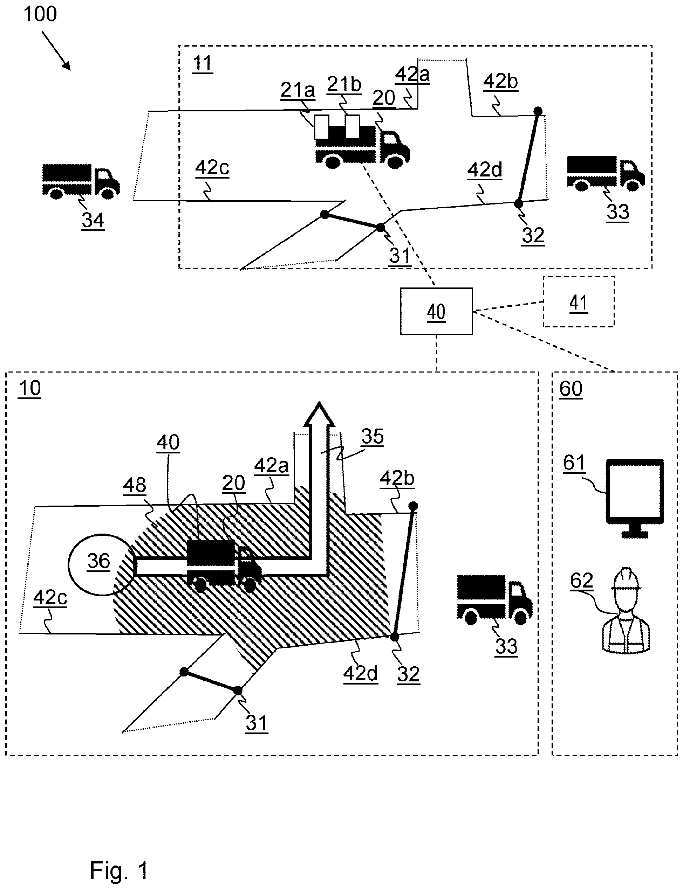

**Fig. 1** is a schematic overview depicting **a mining environment 100, a merged representation 10, a control node 40, a server 41,** and **a remote operator station 60.**

The mining environment 100 may typically be part of an underground mine and may comprise a series of tunnels and spaces. In the mining environment, one or more vehicles operate, such as **a first vehicle 20.** The first vehicle 20 may be any suitable first vehicle for operating and driving in the mining environment 100. For example, the first vehicle 20 may be a drill rig for drilling in the mining environment 100, or a transport vehicle for transporting materials in the mining environment 100. The first vehicle 20 may be associated with **one or more sensors 21a, 21b.** The one or more sensors 21a, 21b may typically be used for sensing the surrounding area of the first vehicle 20. For example, the one or more sensors 21a, 21b may be used for determining a position of **one or more walls 42a, 42b, 42c, 42d** surrounding the first vehicle 20 in the mining environment 100. At least one sensor out of the one or more sensors 21a, 21b may be attached to the first vehicle 20 and may be arranged to continuously scan the surroundings of the first vehicle 20. One or more sensors out of the one or more sensors 21a, 21b may further be arranged in the mining environment 100 to be used for positioning purposes for locating the first vehicle 20 in the mining environment 100, for example, a sensor using radio communication for positioning within the mining environment 100. The mining environment 100 may further comprise **one or more dynamic objects 31, 32, 33, 34.** The one or more dynamic objects 31, 32, 33, 34 may be any suitable dynamic object in the mining environment 100 which may be expected to change status and/or position regularly e.g. change at least once a day, or change based on a triggering event. The status and/or position of the one or more dynamic objects 31, 32, 33, 34 may be necessary for securely operating the first vehicle 20 in the mining environment 100. The one or more dynamic objects comprise one or more other vehicles operating in the mining environment 100 such as **a second vehicle 33** and **a third vehicle 34.**

Additionally, the one or more dynamic objects may comprise one or more **barriers 31, 32** for restricting access to certain areas in the mining environment 100.

The merged representation 10 is produced and updated continuously based on combinations of static and/or dynamic information in the mining environment 100, i.e. produced based on positioning information, sensor data from the one or more sensors 21a 21b, and dynamic traffic information. The positioning information comprises a geolocation representation of the mining environment 100 and a position of the first vehicle 20 in the mining environment 100. The dynamic traffic information indicates a respective status and/or position of the one or more dynamic objects 31, 32, 33, 34.

The merged representation 10 provides continuous assistance for controlling the first vehicle 20 in the mining environment 100. The continuous assistance is provided by the merged representation 10 comprising at least part of the sensor data from the one or more sensors 21a 21b, a respective position of at least one of the one or more dynamic objects 31, 32, 33, 34 when present in an area of the mining environment 100, at least part of the geolocation representation of the mining environment 100 and the position of the first vehicle 20 in the mining environment 100, and **an indication of at least one vehicle route 35** in the mining environment 100. The at least part of the sensor data from the one or more sensors 21a 21b may be represented by **a scanned area 48** in the mining environment 100. illustrated by Fig. 1 with diagonal stripes. The at least one route may be based on **a starting position 36,** and an end position in the mining environment 100. The indication of the at least one vehicle route may comprise routes for manual driving, and/or autonomous routes for autonomous driving, or other visual representation such as arrows to direct the first vehicle 20 to a preferred destination. Routes for autonomous driving may be used for the first vehicle 20 to drive to the starting position 36 and triggering the first vehicle 20 to drive along an autonomous route.

The merged representation 10 may further be limited in size by **an assistance area 11** of the mining environment 100. The assistance area 11 may be an area of the mining environment 100 of a set size, which area is determined by the position of the first vehicle 20. The assistance area 11 may comprise an area of the mining environment 100 which is beyond the line of sight of any of the one or more sensors 21a, 21b. In other words, the merged representation 10 may only need to represent relevant information of objects close to the first vehicle 20, inside the assistance area 11. In Fig. 1, this is illustrated in that the second vehicle 33 is inside the assistance area 11 and is thus represented in the merged representation 10. In contrast, the third vehicle 34 is outside the assistance area 11 and is thus not part of the merged representation 10. Thereby it is possible to control the first vehicle in an efficient manner using a display of a restricted size. This is because, the merged representation 10 presents a particular area of interest in the mining environment 100 which fit into the display of the restricted size. In this way, it is possible to display the continuous assistance for operating the first vehicle 20 in the mining environment 100 in the display of the restricted size without sacrificing any detail or focus needed for operating the first vehicle 20 in the mining environment 100. In particular, when displaying the merged representation 10 using the display of the restricted size, it is no longer needed to switch focus between several displays or to switch focus within a display of a very large size when operating the first vehicle 20 in the mining environment 100. With the display of the restricted size, it is instead possible to maintain focus on the driving aspect of the first vehicle 20, which thus improves the efficiency of operating the first vehicle 20 in the mining environment 100.

The first vehicle 20 may be remotely operated from **a first remote operator station 60.** The first remote operator station may comprise **a display 61** of set size for displaying the merged representation 10. In the first remote operator station 60, **an operator 62** may be present which operator 62 may provide control inputs for controlling the first vehicle 20 remotely.

Methods herein may be performed by **the control node 40.** In some embodiments the control node 40 is part of the first vehicle 20. In some other embodiments the control node 40 may be a remote node in communication with the first vehicle 20, for example, in a control room remotely located from the first vehicle 20 such as the first operator station 60. The control node 40 obtains part of the information used for producing the merged representation 10 from **a server 41.** The server 41 transmits to the control node 40, the dynamic traffic information. The server 41 may additionally transmit to the control node 40, at least part of the positioning information.

By using embodiments herein, it is possible to operate the first vehicle 20 remotely and to be continuously assisted in the mining environment 100 without any need to switch focus to look up information. In this way, it is possible to operate the first vehicle 20 in the mining environment in a more efficient and secure manner than what is possible by using present technology.

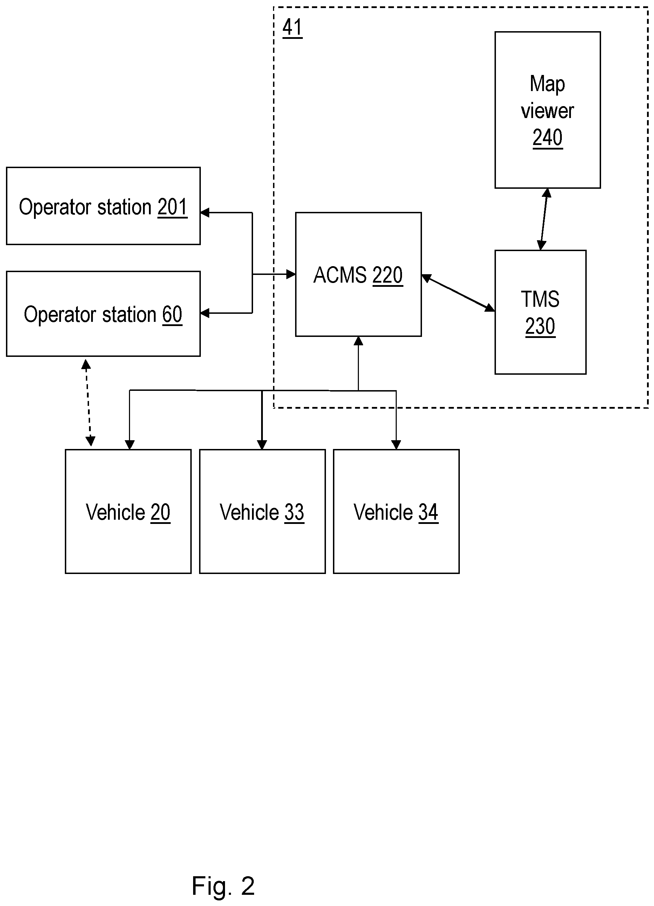

**Fig. 2** is a schematic overview depicting an example system for remotely operating vehicles in the mining environment 100.

In addition to the first operator station 60, **a second operator station 201** may be present for remotely controlling vehicles in the mining environment 100. Any of the first operator station 60 and the second operator station 201 may be capable of remotely controlling the first vehicle 20, the second vehicle 33, and/or the third vehicle 34.

The server 41 may comprise one or more components which may together form a single unit or may be distributed in a network. According to the invention, the server 41 comprises a Traffic Management System (TMS) 230. The server 41 may further comprise **an Automation Common Machine Server (ACMS) 220,** and **a Map viewer 240.**

The ACMS 220 manages control of vehicles in the mining environment, e.g. the first vehicle 20. All control of machines connected to an ACMS is handled through the ACMS. While the actual remote controlling of the vehicles is performed by operator stations, e.g. the first operator station 60, allocation and deallocation of the vehicle identifiers are managed by the ACMS. In other words, the ACMS controls which operator station are to be enabled to remotely control a certain vehicle, e.g. the first vehicle 20. Furthermore, positioning information and status of all vehicles is available in the ACMS 220. The ACMS 220 may in some embodiments receive status and position of vehicles in the mining environment 100 from one or more other servers connected to the TMS 230. Hence, when obtaining information relating to the first vehicle 20 and/or the one or more other vehicles 33, 34, the information and status may be requested and received from the ACMS 220.

The TMS 230 handles positions of the first vehicle 20 and/or the one or more other vehicles 33, 34, e.g. on a map. The TMS may further handle dynamic objects in the mining environment 100 such as having control over a fleet of vehicles, barrier positions, geofencing production assignments etc. In other words, the positioning information and the dynamic traffic information may be obtained from the TMS 230 , e.g. via the ACMS 220.

The map viewer 240 may handle the geolocation representation of the mining environment 100. This may be a map of the mining environment 100. The geolocation representation, or a part of the geolocation representation, may be requested and received from the map viewer 240. For example, the TMS 230 handles positions based on the geolocation representation received from the map viewer 240 and based on positions of the vehicles from the ACMS 220.

In some embodiments herein, when initializing the use of the geolocation representation, there may be a verification check to ensure that the same geolocation representation is present in the TMS 230 and in the ACMS 220. If there is a mismatch, the geolocation representation in the ACMS 220 is updated. Similarly, in some embodiments herein, if the geolocation representation is updated in the TMS 230, the geolocation representation in the ACMS 220 is updated.

A number of embodiments will now be described, some of which may be seen as alternatives, while some may be used in combination.

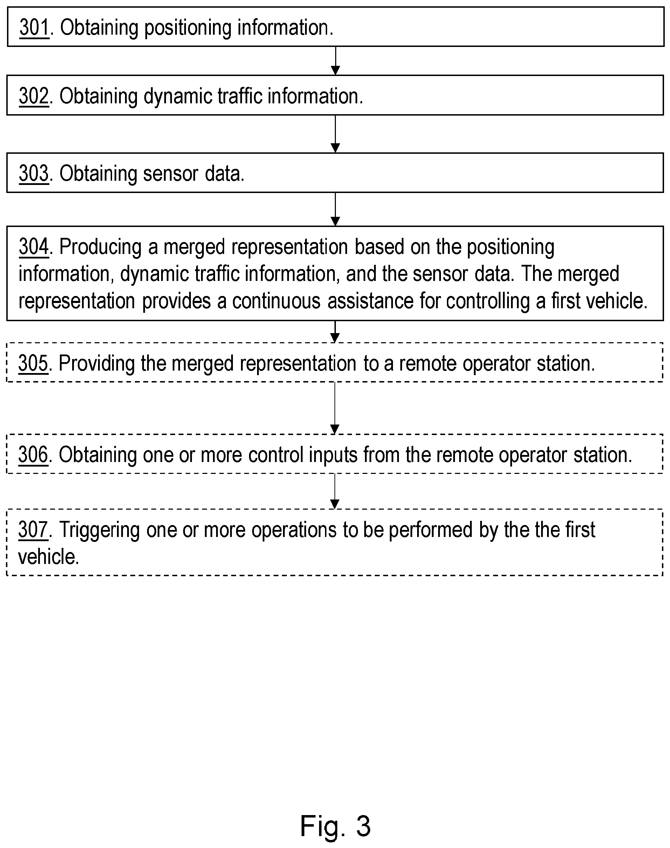

**Fig. 3** shows example embodiments of a method for assisted controlling of the first vehicle 20 in the mining environment 100. The method comprises the following actions, which actions may be taken in any suitable order. Optional actions are referred to as dashed boxes in Fig. 3.

**Action 301.** The method comprises obtaining positioning information. The positioning information comprises a geolocation representation of the mining environment 100, and a position of the first vehicle 20 in the mining environment 100. The positioning information may in some embodiments comprise at least one destination in the mining environment 100. The at least one destination in the mining environment may be an end location in the mining environment 100 indicating a destination for the at least one route.

At least part of the positioning information may be received from the server 41. Some of the positioning information may however be obtained by input and/or by sensor data. For example, the location of the first vehicle may be sensed by the one or more sensors 21a, 21b, or may be input manually by the operator 60. Obtaining the positioning information may further comprise obtaining infrastructure information. The infrastructure information may indicate a respective position of infrastructure objects in the mining environment 100. The infrastructure information may be static or semi-static information. In other words, the infrastructure information is expected to update very rarely, e.g. at most once a day or once a week. The infrastructure objects may comprise any one or more out of: one or more pipes, one or more ventilation paths, one or more power grids, one or more pumps, one or more road signs, one or more radio access points, and one or more labels associated with positions or areas in the mining environment 100. Obtaining the positioning information may further comprise obtaining a travelling direction of the first vehicle 20 in the mining environment 100, e.g. forward or in reverse. The travelling direction may further be obtained based on obtaining a speed of the vehicle and/or may be based on obtaining a gear currently used by the first vehicle, e.g. based on sensor data of the one or more sensors 21a, 21b. Obtaining the positioning information may further comprise obtaining the geolocation representation from a memory or a server 41. The server 41 may track which entities, e.g. the control node 40 and/or the first vehicle 20, are using the geolocation representation of the mining environment 100. When the geolocation representation of the mining environment 100 is updated at the server 41, a new updated geolocation representation of the mining environment 100 may be sent to the entities which are using the geolocation representation of the mining environment 100. The geolocation representation may comprise static information of a spatial arrangement of the mining environment 100. For example, the static information of the spatial arrangement may comprise physical attributes such as length and/or width of a number of tunnels and/or roads comprised in the mining environment 100. In some cases, the geolocation representation may be a map, e.g. a global map or a local map, of at least a part of the mining environment 100.

**Action 302.** The method comprises obtaining dynamic traffic information based on the position of the first vehicle 20. The dynamic traffic information may indicate respective status and/or positions of one or more dynamic objects 31, 32, 33, 34 in the mining environment 100. The one or more dynamic objects 31, 32, 33, 34 may comprise any one or more out of: the one or more others 33, 34 in the mining environment 100, the one or more barriers 31,32, one or more available autonomous routes in the mining environment 100, one or more routes, e.g. active routes, in the mining environment 100, one or more loading areas, one or more dumping areas, one or more traffic lights, and one or more traffic zones in the mining environment 100, wherein each of the one or more respective traffic zones comprises information of one or more traffic rules and/or one or more road conditions for a respective area in the mining environment 100. In other words, the one or more dynamic objects 31, 32, 33, 34 may comprise information of the mining environment 100 which may be subject to change position and/or status. The position and/or status of any one of the one or more dynamic objects 31, 32, 33, 34 may change dynamically, e.g. periodically, frequently, and/or based on a triggered event. Any change of the dynamic objects may cause a need to update the at least one route and/or the at least one destination. For example, the one or more other vehicles 33, 34 may drive around in the mining environment 100 and update their position accordingly. When the one or more other vehicles 33, 34 are driving in a certain area of the mining environment 100, the first vehicle cannot drive there concurrently and the first vehicle 20 may need to wait until the one or more other vehicles 33, 34 has left the area. In some embodiments, the at least one route may need to be updated such that the at least one route indicates a route in the mining environment around the one or more other vehicles 33, 34. The information of the one or more barriers may comprise the position, status and type of the one or more barriers 31, 32. The one or more barriers may comprise one or more safety classified barriers and/or may comprise a one or more geo fences. The one or more safety classified barriers may comprise one or more light barriers. The one or more safety classified barriers may each be activated or inactivated at any point in time. When activated or deactivated, the status of any of the one or more light barriers may need to be updated in real time. The status of any one of the one or more light barriers may in some scenarios be updated at 1Hz or more often. If the first vehicle 20 to drive through an inactivated safety classified barrier, this may trigger an alarm and/or halt the first vehicle 20 and/or halt the one or more vehicles 33, 34. The one or more geo fences may be used for restricting traffic to one or more restricted areas in the mining environment 100. The one or more restricted areas may be defined based on a plurality of positions in the mining environment 100. The plurality of positions defining the one or more restricted areas in the mining environment 100 may be based on the geolocation representation of the mining environment 100. If the first vehicle 20 drives through a geo fence, a notification may be sent, e.g. to the one or more vehicles 33, 34. The information of one or more available autonomous routes and/or the one or more active routes in the mining environment 100, may indicate whether or not it is presently possible to use the respective routes. The respective routes may be continuously re-calculated if at least one part of the respective routes is not possible for the first vehicle 20 to drive in.

**Action 303**. The method comprises obtaining sensor data from one or more sensors 21a, 21b associated with the first vehicle 20. The sensor data may capture information of the surrounding area of the first vehicle 20, and detect whether or not any object is present in the mining environment such as close to the first vehicle, e.g., within a threshold. The sensor data may additionally capture any suitable information of the first vehicle 20, e.g. orientation of the first vehicle 20 and/or an angle indicating how much the first vehicle 20 is turning, e.g. in relation to a reference point or a center point of the first vehicle 20. Obtaining the sensor data may comprise determining a blind direction of the first vehicle 20. The blind direction of the first vehicle 20 may be a direction of the first vehicle 20 in which direction the one or more sensors 21a, 21b are unable to obtain sensor data. This may for example be when the one or more sensors 21a, 21b do not have a sensor in a certain angle of the first vehicle 20, or comprise a rotating sensor which does not cover 360 degrees around the first vehicle, or are obscured by parts of the first vehicle 20 or the mining environment 100. Obtaining the sensor data may thus further comprise deriving the sensor data for the blind direction of the first vehicle 20 based on previously obtained sensor data. For example, the one or more sensors 21a, 21b may have previously obtained sensor data for least parts of the area associated with the blind direction, and may use the previously obtained sensor data for deriving the sensor data. The previously obtained sensor data may comprise a respective time stamp for when they were obtained. In these cases, the previously used sensor data may not be too old, e.g. not older than a threshold. Obtaining the sensor data may comprise obtaining sensor data from any one or more out of at least one laser sensor, e.g. at least one Lidar sensor for scanning the mining environment 100, at least one articulation angle sensor, at least one network positioning sensor, e.g. for determining a position of the first vehicle in the mining environment 100, and at least one odometer.

**Action 304.** The method comprises producing the merged representation 10 of the mining environment 100 based on the obtained positioning information, the obtained dynamic traffic information, and the obtained sensor data. The merged representation 10 provides continuous assistance for controlling the first vehicle 20 in the mining environment 100 by comprising:
- at least part of the obtained sensor data,
- a respective position of at least one of the one or more dynamic objects 31, 32, 33, 34 when present in an area of the mining environment 100, e.g. the assistance area 11, and
- at least part of the geolocation representation of the mining environment 100 and the position of the first vehicle 20 in the mining environment 100, and
- an indication of at least one vehicle route 35 in the mining environment.

In some embodiments the one or more dynamic objects 31, 32, 33, 34 may only be presented in the merged representation 10 when they are present in the assistance area 11 of the mining environment. In this way, only dynamic objects of interest for remotely controlling the first vehicle 20 may be presented in the merged representation 10 which thus reduces a cognitive effort for keeping track of dynamic objects 31, 32, 33, 34 in the mining environment 100, as only a few relevant dynamic objects need to be considered.

The at least one vehicle route may comprise a route to the at least one destination. In these embodiments, the indication of the at least one vehicle route 35 may enable a continuous guiding to the at least one destination. In some embodiments, the at least one route comprises at least one manually specified route. In some embodiments, the at least one route comprises at least one autonomous route. Since the merged representation 10 provides continuous assistance for controlling the first vehicle 20 in the mining environment 100, it is possible to operate the first vehicle 20 remotely and to be continuously assisted without need to switch focus to look up information since all necessary information for controlling the first vehicle 20 is enabled through the merged representation 10. The merged representation 10 may be produced to comprise one or more positions of the one or more walls 42a, 42b, 42c, 42d surrounding the first vehicle 20 in the mining environment 100. Producing the merged representation 10 may then comprise estimating one or more distances to the one or more walls 42a, 42b, 42c, 42d surrounding the first vehicle 20 in the mining environment 100 based on the obtained sensor data. Furthermore, producing the merged representation 10 may then comprise determining the one or more positions of the one or more walls 42a, 42b, 42c, 42d surrounding the first vehicle 20 in the mining environment 100. Determining the one or more positions of the one or more walls 42a, 42b, 42c, 42d may be based on the position of the first vehicle 20 in the mining environment 100, and the estimated one or more distances to the one or more walls 42a, 42b, 42c, 42d surrounding the first vehicle 20 in the mining environment 100. The merged representation 10 may further comprise the one or more walls in the geolocation representation of the mining environment 100. Producing the merged representation 10 may further comprise determining at least one disparity between the obtained sensor data and the geolocation representation of the mining environment 100. For example, it may be possible to compare the determined one or more walls 42a, 42b, 42c, 42d with walls comprised in the geolocation representation of the mining environment. The determined at least one disparity may be presented in the merged representation 10. When the at least one disparity is greater than a threshold, the method may further comprise triggering an alarm. Producing the merged representation 10 may comprise calculating the at least one vehicle route, e.g. to the at least one destination, in the mining environment 100. For example, the shortest path possible for the first vehicle 20 to travel along to the at least one end destination may be calculated and used as a basis for the at least one vehicle route. The at least one vehicle route may be continuously updated and/or re-calculated automatically. This may be needed when any of the at least one vehicle route becomes inaccessible, e.g. when one or more other vehicles 33, 34 is in the way of the at least one route, or e.g. when one or more barriers in the at least one route becomes inactive and restricts travel of the first vehicle 20 along the at least one route. Producing the merged representation 10 may further based on the obtained travelling direction of the first vehicle 20, e.g. as in action 301. For example the merged presentation may comprise more information in the travelling direction of the first vehicle 20. When the sensor data is derived based on previous sensor data, the merged representation 10 may indicate an area which is affected by the previous sensor data.

**Action 305**. The method may comprise providing the merged representation 10 of the mining environment 100 to the display 61 of set size at the first remote operator station 60. Since the merged representation comprises all essential information for controlling the first vehicle 20 in the mining environment 100, the set size of the display 61 may be smaller than if needed to represent the information in a plurality of separate views. The first remote operator station 60 may further be arranged to remotely control the first vehicle 20 in the mining environment 100 based on the continuous assistance provided by the merged representation 10.

**Action 306**. The method may comprise obtaining one or more control inputs from the first remote operator station 60. The one or more control inputs is for remotely controlling the first vehicle 20 in the mining environment 100. For example, the operator 62 may input the one or more control inputs at the first remote operator station 60 for remotely controlling the first vehicle 20.

**Action 307**. The method may further comprise triggering one or more operations to be performed by the first vehicle 20 in the mining environment 100 based on the one or more control inputs.

The above embodiments will now be further explained and exemplified below. The embodiments below may be combined with any suitable embodiment above.

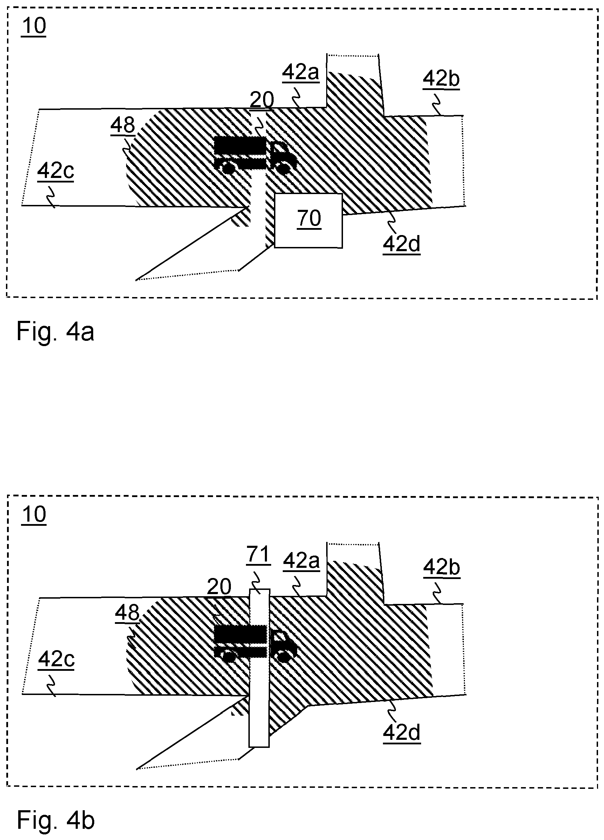

**Fig. 4a** illustrates an example scenario when there is **at least one disparity 70** between the obtained sensor data and the geolocation representation of the mining environment 100. The obtained sensor data from the one or more sensors may be indicated by the scanned area 48 illustrated in Fig 4a with diagonal stripes. In this example scenario, the sensor data may have been used to e.g., as in action 303, determine the position of the one or more walls 42a, 42b, 42c, 42d in the mining environment 100. In this scenario, when the obtained sensor data is compared with the geolocation representation of the mining environment the at least on disparity 70 is detected. In other words, in this scenario there is a mismatch between what the one or more sensors 21a, 21b is detecting and the information that is available in the geolocation representation. The disparity 70 may indicate that a recent change to the mining environment 100 has occurred, e.g. that a new part of the mining environment 100 has been excavated and/or that there has been at least a partial collapse of the mining environment 100. Alternatively, the disparity 70 may indicate a calibration error of the one or more sensors 21a, 21b. The determined at least one disparity 70 may be presented in the merged representation 10 as illustrated in Fig 4a. When the at least one disparity is greater than a threshold, the method may further comprise triggering an alarm.

**Fig. 4b** illustrate an example scenario when there is a **blind direction 71** of the first vehicle 20. In the example scenario of Fig. 4b, the one or more sensors may comprise one rotating sensor for sensing part of the rear-side of the vehicle, and one rotating sensor for sensing part of the front-side of the vehicle. The obtained sensor data from the one or more sensors may be indicated by the scanned area 48 illustrated in Fig 4b with diagonal stripes. The one or more sensors may be arranged such that the blind direction 71 is to the left and right sides of the first vehicle 20. This may be since, in the blind direction 71, the one or more sensors 21a, 21b are unable to obtain sensor data, e.g. as the sensors only scan the front and rear side of the first vehicle 20. In these cases, obtaining sensor data for the blind direction 71 may comprise deriving the sensor data for the blind direction 71 of the first vehicle 20 based on previously obtained sensor data. For example, the one or more sensors 21a, 21b may have previously obtained sensor data for least parts of the area associated with the blind direction 71, and the previously obtained sensor data may thus be used for deriving the sensor data. For example, the previously obtained sensor data may be stored in one or more buffers, e.g. one per sensor, or one per direction of the first vehicle 20, where sensor data are added at a certain rate per position in the mining environment 100. The sensor data may be removed from the respective one or more buffers after a predetermined time, and/or when first vehicle 20 has travelled a certain distance and/or turned a certain angle. The one or more buffers may risk overflowing due to too much sensor data. To overcome this problem, one or more zones may be defined in front of, and/or in the rear of the first vehicle 20. In these cases sensor data may be added from the front and removed from the back when driving forward, and sensor data may be added from the back and removed from the front when driving in reverse. To avoid overflowing the one or more respective buffers, while still having enough points to cover the blind direction 71, it may further be possible to reduce the rate in which sensor data are added to the one or more respective buffers. Furthermore, if a position associated with a sensor data in one of the respective buffers differs by less than a threshold from newly obtained sensor data, the newly obtained sensor data may not be added to any buffer. To perform the method actions above, e.g. any of actions 301-307, the control node 40 is configured to assist in controlling the first vehicle 20 in the mining environment 100. In some embodiments the control node 40 is part of the first vehicle 20. In some other embodiments the control node 40 may be a remote node in communication with the first vehicle 20, for example, in a control room remotely located from the first vehicle 20 such as the first operator station 60.

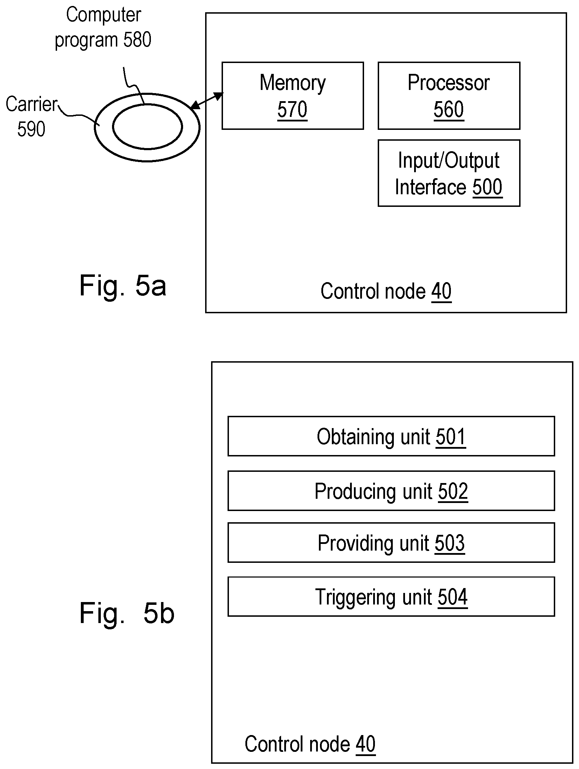

The control node 40 may comprise an arrangement depicted in **Figs. 5a and 5b****.** The control node 40 may comprise an **input and output interface 500** e.g. for communicating with the first vehicle 20, the server 41, and/or the remote operator station 60. The input and output interface 500 may comprise a wireless receiver (not shown) and a wireless transmitter (not shown).

The control node 40 may further be configured to, e.g. by means of an **obtaining unit 501** in the the control node 40, obtain positioning information. The positioning information comprises a geolocation representation of the mining environment 100, and a position of the first vehicle 20 in the mining environment 100.

The control node 40 may further be configured to, e.g. by means of the obtaining unit 501 in the the control node 40, based on the position of the first vehicle 20, obtain dynamic traffic information. The dynamic traffic information indicates respective status and/or positions of one or more dynamic objects 31, 32, 33, 34 in the mining environment 100. The one or more dynamic objects 31, 32, 33, 34 comprise:
- the one or more other vehicles 33, 34 in the mining environment 100, and may further comprise any one or more out of:
   - the one or more barriers 31, 32,
   - one or more available autonomous routes in the mining environment 100.
   - one or more active routes in the mining environment 100,.
   - one or more loading areas,
   - one or more dumping areas,
   - one or more traffic lights, and
   - one or more traffic zones in the mining environment 100, wherein each of the one or more respective traffic zones may comprise information of one or more traffic rules and/or one or more road conditions for a respective area in the mining environment 100.

In other words, the one or more dynamic objects 31, 32, 33, 34 may comprise information of the mining environment 100 which may be subject to change position or status.

The control node 40 may further be configured to, e.g. by means of the obtaining unit 501 in the the control node 40, obtain sensor data from the one or more sensors 21a, 21b associated with the first vehicle 20.

The control node 40 may further be configured to, e.g. by means of the obtaining unit 501 in the the control node 40, obtain the sensor data by deriving the sensor data for a blind direction of the first vehicle 20 based on previously obtained sensor data. The control node 40 may further be configured to determine the blind direction to be a direction of the first vehicle 20 in which direction the one or more sensors 21a, 21b are unable to obtain sensor data.

The control node 40 may further be configured to, e.g. by means of the obtaining unit 501 in the the control node 40, obtain the sensor data from any one or more out of:
- at least one laser sensor,
- at least one articulation angle sensor,
- at least one network positioning sensor, and
- at least one odometer.

The control node 40 may further be configured to, e.g. by means of the obtaining unit 501 in the the control node 40, obtain the positioning information by obtaining infrastructure information. The infrastructure information indicates a respective position of infrastructure objects in the mining environment 100. The infrastructure objects may comprise any one or more out of:
- one or more pipes,
- one or more ventilation paths,
- one or more power grids,
- one or more pumps,
- one or more road signs,
- one or more radio access points, and
- one or more labels associated with positions or areas in the mining environment 100.

The control node 40 may further be configured to, e.g. by means of the obtaining unit 501 in the the control node 40, obtain the positioning information by obtaining a travelling direction of the first vehicle 20 in the mining environment 100.

The control node 40 may further be configured to, e.g. by means of the obtaining unit 501 in the the control node 40, obtain the positioning information by obtaining the geolocation representation from a memory or a server 41. The geolocation representation may comprise static information of a spatial arrangement of the mining environment 100.

The control node 40 may further be configured to, e.g. by means of a **producing unit 502** in the the control node 40, based on the obtained positioning information, the obtained dynamic traffic information, and the obtained sensor data, produce the merged representation 10 of the mining environment 100. The merged representation 10 provides continuous assistance for controlling the first vehicle 20 in the mining environment 100, and wherein the merged representation 10 comprises at least part of the obtained sensor data, a respective position of at least one of the one or more dynamic objects 31, 32, 33, 34 when present in an area of the mining environment 100, at least part of the geolocation representation of the mining environment 100 and the position of the first vehicle 20 in the mining environment 100, and an indication of at least one route 35 in the mining environment.

The control node 40 may further be configured to, e.g. by means of the producing unit 502 in the the control node 40, produce the merged representation 10 to comprise one or more positions of the one or more walls 42a, 42b, 42c, 42d surrounding the first vehicle 20 in the mining environment 100. The control node 40 may further be configured to, estimate one or more distances to the one or more walls 42a, 42b, 42c, 42d surrounding the first vehicle 20 in the mining environment 100 based on the obtained sensor data. Based on the position of the first vehicle 20 in the mining environment 100, and the estimated one or more distances to the one or more walls 42a, 42b, 42c, 42d surrounding the first vehicle 20 in the mining environment 100, the control node 40 may further be configured to determining the one or more positions of the one or more walls 42a, 42b, 42c, 42d surrounding the first vehicle 20 in the mining environment 100.

The control node 40 may further be configured to, e.g. by means of the producing unit 502 in the the control node 40, produce the merged representation 10 by presenting a determined at least one disparity in the merged representation 10. The control node 40 may further be configured to determine the at least one disparity between the obtained sensor data and the geolocation representation of the mining environment 100.

The control node 40 may further be configured to, e.g. by means of a **triggering unit 504** in the the control node 40, when the at least one disparity is greater than a threshold, trigger an alarm.

The control node 40 may further be configured to, e.g. by means of the producing unit 502 in the the control node 40, produce the merged representation 10 further based on the obtained travelling direction.

The control node 40 may further be configured to, e.g. by means of the producing unit 502 in the the control node 40, produce the merged representation 10 by calculating the at least one vehicle route, e.g. to the at least one destination, in the mining environment 100.

The control node 40 may further be configured to, e.g. by means of a **providing unit 503** in the the control node 40, provide the merged representation 10 of the mining environment 100 to the first remote operator station 60. The first remote operator station may be arranged to remotely control the first vehicle 20 in the mining environment 100 based on the continuous assistance provided by the merged representation 10.

The control node 40 may further be configured to, e.g. by means of the obtaining unit 501 in the the control node 40, obtain one or more control inputs from the first remote operator station 60. The one or more control inputs may be for remotely controlling the first vehicle 20 in the mining environment 100.

The control node 40 may further be configured to, e.g. by means of the triggering unit 504 in the the control node 40, based on the one or more control inputs, trigger one or more operations to be performed by the first vehicle 20 in the mining environment 100.

The embodiments herein may be implemented through a respective processor or one or more processors, such as the **processor 560** of a processing circuitry in the control node 40 depicted in Fig. 5a, together with respective computer program code for performing the functions and actions of the embodiments herein. The program code mentioned above may also be provided as a computer program product, for instance in the form of a data carrier carrying computer program code for performing the embodiments herein when being loaded into the control node 40. One such carrier may be in the form of a CD ROM disc. It is however feasible with other data carriers such as a memory stick. The computer program code may furthermore be provided as pure program code on a server and downloaded to the control node 40.

The control node 40 may further comprise a **memory 570** comprising one or more memory units. The memory 570 comprises instructions executable by the processor in the control node 40. The memory 570 is arranged to be used to store e.g. information, indications, data, configurations, sensor data, routes, dynamic traffic information, positioning information, and applications to perform the methods herein when being executed in the control node 40.

In some embodiments, a **computer program 580** comprises instructions, which when executed by the respective at least one processor 560, cause the at least one processor of the control node 40 to perform the actions above.

In an unclaimed example, a respective **carrier 590** comprises the respective computer program 580, wherein the carrier 590 is one of an electronic signal, an optical signal, an electromagnetic signal, a magnetic signal, an electric signal, a radio signal, a microwave signal, or a computer-readable storage medium.

Those skilled in the art will appreciate that the units in the control node 40 described above may refer to a combination of analog and digital circuits, and/or one or more processors configured with software and/or firmware, e.g. stored in the control node 40, that when executed by the respective one or more processors such as the processors described above. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip (SoC).

When using the word "comprise" or "comprising" it shall be interpreted as non-limiting, i.e. meaning "consist at least of".

It will be appreciated that the foregoing description and the accompanying drawings represent non-limiting examples of the methods and apparatus taught herein. As such, the apparatus and techniques taught herein are not limited by the foregoing description and accompanying drawings. Instead, the embodiments herein are limited only by the following claims and their legal equivalents.

## Claims

1. A method for assisted controlling of a first vehicle (20) in a mining environment (100), the method comprises:
- obtaining (301) positioning information, wherein the positioning information comprises a geolocation representation of the mining environment (100), and a position of the first vehicle (20) in the mining environment (100);
- based on the obtained position of the first vehicle (20), obtaining (302) dynamic traffic information from a server (41), wherein the dynamic traffic information indicates respective positions of one or more dynamic objects (31, 32, 33, 34), wherein the one or more dynamic objects comprise one or more other vehicles (33, 34) in the mining environment (100), and wherein the server comprises a traffic management system handling positions of the first vehicle (20) and the one or more other vehicles (33, 34);
- obtaining (303) sensor data from one or more sensors (21a, 21b) associated with the first vehicle (20);
- based on the obtained positioning information, the obtained dynamic traffic information, and the obtained sensor data, producing (304) a merged representation (10) of the mining environment (100), wherein the merged representation (10) provides continuous assistance for controlling the first vehicle (20) in the mining environment (100) by comprising:
- at least part of the obtained sensor data,
- a respective position of one or more other vehicles (33, 34) when present in an area of the mining environment (100),
- at least part of the geolocation representation of the mining environment (100) and the position of the first vehicle (20) in the mining environment (100), and
- an indication of at least one vehicle route (35) in the mining environment.

2. The method according to claim 1, further comprising:
- providing (305) the merged representation (10) of the mining environment (100) to a first remote operator station (60), wherein the first remote operator station is arranged to remotely control the first vehicle (20) in the mining environment (100) based on the continuous assistance provided by the merged representation (10).

3. The method according to claim 2 further comprising:
- obtaining (306) one or more control inputs from the first remote operator station (60), wherein the one or more control inputs is for remotely controlling the first vehicle (20) in the mining environment (100); and
- based on the one or more control inputs, triggering (307) one or more operations to be performed by the first vehicle (20) in the mining environment (100).

4. The method according to any of claims 1-3, wherein producing the merged representation (10) further comprises:
- based on the obtained sensor data, estimating one or more distances to one or more walls (42a, 42b, 42c, 42d) surrounding the first vehicle (20) in the mining environment (100);
- based on the position of the first vehicle (20) in the mining environment (100), and the estimated one or more distances to the one or more walls (42a, 42b, 42c, 42d) surrounding the first vehicle (20) in the mining environment (100), determining one or more positions of the one or more walls (42a, 42b, 42c, 42d) surrounding the first vehicle (20) in the mining environment (100); and
wherein the merged representation (10) is produced to comprise the determined one or more positions of the one or more walls (42a, 42b, 42c, 42d) surrounding the first vehicle (20) in the mining environment (100).

5. The method according to any of claims 1-4, wherein obtaining the sensor data comprises:
- determining a blind direction (71) of the first vehicle (20), wherein the blind direction (71) of the first vehicle (20) is a direction of the first vehicle (20) in which direction the one or more sensors (21a, 21b) are unable to obtain sensor data; and
- deriving the sensor data for the blind direction (71) of the first vehicle (20) based on previously obtained sensor data.

6. The method according to any of claims 1-5, wherein producing the merged representation (10) further comprises:
- determining at least one disparity between the obtained sensor data and the geolocation representation of the mining environment (100); and
- presenting the determined at least one disparity in the merged representation (10).

7. The method according to claim 6, further comprising:
- when the at least one disparity is greater than a threshold, triggering an alarm.

8. The method according to claim 1-7, wherein obtaining the sensor data comprises obtaining sensor data from any one or more out of:
- at least one laser sensor,
- at least one articulation angle sensor,
- at least one network positioning sensor, and
- at least one odometer.

9. The method according to any of claims 1-8, wherein the one or more dynamic objects (31, 32, 33, 34) further comprise any one or more out of:
- one or more barriers (31,32),
- one or more available autonomous routes in the mining environment (100),
- one or more active routes in the mining environment (100),
- one or more loading areas,
- one or more dumping areas,
- one or more traffic lights, and
- one or more traffic zones in the mining environment (100), wherein each of the one or more respective traffic zones comprises information of one or more traffic rules and/or one or more road conditions for a respective area in the mining environment (100).

10. The method according to any of claims 1-9, wherein the dynamic traffic information indicates a respective status of the one or more dynamic objects (31, 32, 33, 34) in the mining environment (100).

11. The method according to any of claims 1-10, wherein obtaining the positioning information comprises obtaining infrastructure information, wherein the infrastructure information indicates a respective position of infrastructure objects in the mining environment (100).

12. The method according to any of claims 1-11, wherein obtaining the positioning information further comprises obtaining a travelling direction of the first vehicle (20) in the mining environment (100), and wherein producing the merged representation (10) is further based on the obtained travelling direction.

13. The method according to any of claims 1-12, wherein obtaining the positioning information comprises obtaining the geolocation representation from a memory or the server (41), and wherein the geolocation representation comprises static information of a spatial arrangement of the mining environment (100).

14. A control node configured to assist in controlling a first vehicle (20) in a mining environment (100), the control node is further configured to:
- obtain positioning information, wherein the positioning information comprises a geolocation representation of the mining environment (100), and a position of the first vehicle (20) in the mining environment (100);
- based on the obtained position of the first vehicle (20), obtaining dynamic traffic information from a server (41), wherein the dynamic traffic information indicates respective positions of one or more dynamic objects (31, 32, 33, 34), wherein the one or more dynamic objects comprise one or more other vehicles (33, 34) in the mining environment (100), and wherein the server comprises a traffic management system handling positions of the first vehicle (20) and the one or more other vehicles (33, 34);
- obtaining sensor data from one or more sensors (21a, 21b) associated with the first vehicle (20);
- based on the obtained positioning information, the obtained dynamic traffic information, and the obtained sensor data, producing a merged representation (10) of the mining environment (100), wherein the merged representation (10) the mining environment (100) provides continuous assistance for controlling the first vehicle (20) in the mining environment (100) by comprising:
- at least part of the obtained sensor data,
- a respective position of one or more other vehicles (,33, 34) when present in an area of the mining environment (100),
- at least part of the geolocation representation of the mining environment (100) and the position of the first vehicle (20) in the mining environment (100), and
- an indication of at least one vehicle route (35) in the mining environment.

15. A computer program (580) comprising instructions, which when executed by a processor, causes the processor (560) to perform actions according to any of claims 1-13.

## Patentansprüche

1. Verfahren zum unterstützten Steuern eines ersten Fahrzeugs (20) in einer Bergbauumgebung (100), wobei das Verfahren umfasst:
- Erhalten (301) von Positionsinformationen, wobei die Positionsinformationen eine Geolokalisierungsdarstellung der Bergbauumgebung (100) und eine Position des ersten Fahrzeugs (20) in der Bergbauumgebung (100) umfassen;
- basierend auf der erhaltenen Position des ersten Fahrzeugs (20), Erhalten (302) von dynamischen Verkehrsinformationen von einem Server (41), wobei die dynamischen Verkehrsinformationen jeweilige Positionen eines oder mehrerer dynamischer Objekte (31, 32, 33, 34) angeben, wobei das eine oder die mehreren dynamischen Objekte ein oder mehrere andere Fahrzeuge (33, 34) in der Bergbauumgebung (100) umfassen, und wobei der Server ein Verkehrsverwaltungssystem umfasst, das Positionen des ersten Fahrzeugs (20) und des einen oder der mehreren anderen Fahrzeuge (33, 34) handhabt;
- Erhalten (303) von Sensordaten von einem oder mehreren Sensoren (21a, 21b), die dem ersten Fahrzeug (20) zugeordnet sind;
- basierend auf den erhaltenen Positionsinformationen, den erhaltenen dynamischen Verkehrsinformationen und den erhaltenen Sensordaten, Erstellen (304) einer zusammengeführten Darstellung (10) der Bergbauumgebung (100), wobei die zusammengeführte Darstellung (10) kontinuierliche Unterstützung zum Steuern des ersten Fahrzeugs (20) in der Bergbauumgebung (100) bereitstellt, indem sie umfasst:
- mindestens einen Teil der erhaltenen Sensordaten,
- eine jeweilige Position eines oder mehrerer anderer Fahrzeuge (33, 34), wenn sie in einem Bereich der Bergbauumgebung (100) anwesend sind,
- mindestens einen Teil der Geolokalisierungsdarstellung der Bergbauumgebung (100) und die Position des ersten Fahrzeugs (20) in der Bergbauumgebung (100), und
- eine Angabe mindestens einer Fahrzeugroute (35) in der Bergbauumgebung.

2. Verfahren nach Anspruch 1, weiter umfassend:
- Bereitstellen (305) der zusammengeführten Darstellung (10) der Bergbauumgebung (100) an eine erste Fernbedienerstation (60), wobei die erste Fernbedienerstation dazu eingerichtet ist, das erste Fahrzeug (20) in der Bergbauumgebung (100) basierend auf der kontinuierlichen Unterstützung fernzusteuern, die durch die zusammengeführte Darstellung (10) bereitgestellt wird.

3. Verfahren nach Anspruch 2, weiter umfassend:
- Erhalten (306) von einer oder mehreren Steuereingaben von der ersten Fernbedienerstation (60), wobei die eine oder die mehreren Steuereingaben zum Fernsteuern des ersten Fahrzeugs (20) in der Bergbauumgebung (100) dienen; und
- basierend auf der einen oder den mehreren Steuereingaben, Auslösen (307) eines oder mehrerer Vorgänge, die durch das erste Fahrzeug (20) in der Bergbauumgebung (100) durchzuführen sind.

4. Verfahren nach einem der Ansprüche 1-3, wobei das Erstellen der zusammengeführten Darstellung (10) weiter umfasst:
- basierend auf den erhaltenen Sensordaten, Schätzen eines oder mehrerer Abstände zu einer oder mehreren Wänden (42a, 42b, 42c, 42d), die das erste Fahrzeug (20) in der Bergbauumgebung (100) umgeben;
- basierend auf der Position des ersten Fahrzeugs (20) in der Bergbauumgebung (100) und dem geschätzten einen oder mehreren Abständen zu der einen oder den mehreren Wänden (42a, 42b, 42c, 42d), die das erste Fahrzeug (20) in der Bergbauumgebung (100) umgeben, Bestimmen einer oder mehrerer Positionen der einen oder der mehreren Wände (42a, 42b, 42c, 42d), die das erste Fahrzeug (20) in der Bergbauumgebung (100) umgeben; und
wobei die zusammengeführte Darstellung (10) erstellt wird, um die eine oder die mehreren Positionen der einen oder der mehreren Wände (42a, 42b, 42c, 42d) zu umfassen, die das erste Fahrzeug (20) in der Bergbauumgebung (100) umgeben.

5. Verfahren nach einem der Ansprüche 1-4, wobei das Erhalten der Sensordaten umfasst:
- Bestimmen einer Blindrichtung (71) des ersten Fahrzeugs (20), wobei die Blindrichtung (71) des ersten Fahrzeugs (20) eine Richtung des ersten Fahrzeugs (20) ist, in der der eine oder die mehreren Sensoren (21a, 21b) nicht dazu in der Lage sind, Sensordaten zu erhalten; und
- Ableiten der Sensordaten für die Blindrichtung (71) des ersten Fahrzeugs (20) basierend auf zuvor erhaltenen Sensordaten.

6. Verfahren nach einem der Ansprüche 1-5, wobei das Erstellen der zusammengeführten Darstellung (10) weiter umfasst:
- Bestimmen mindestens einer Disparität zwischen den erhaltenen Sensordaten und der Geolokalisierungsdarstellung der Bergbauumgebung (100); und
- Darstellen der bestimmten mindestens einen Disparität in der zusammengeführten Darstellung (10).

7. Verfahren nach Anspruch 6, weiter umfassend:
- wenn die mindestens eine Disparität größer als ein Schwellenwert ist, Auslösen eines Alarms.

8. Verfahren nach Anspruch 1-7, wobei das Erhalten der Sensordaten Erhalten von Sensordaten von einem oder mehreren umfasst von:
- mindestens einem Lasersensor,
- mindestens einem Gelenkwinkelsensor,
- mindestens einem Netzwerkpositionssensor, und
- mindestens einem Wegmesser.

9. Verfahren nach einem der Ansprüche 1-8, wobei das eine oder die mehreren dynamischen Objekte (31, 32, 33, 34) weiter eines oder mehrere umfassen von:
- einer oder mehreren Barrieren (31, 32),
- einer oder mehreren verfügbaren autonomen Routen in der Bergbauumgebung (100),
- einer oder mehreren aktiven Routen in der Bergbauumgebung (100),
- einem oder mehreren Beladebereichen,
- einem oder mehreren Abladebereichen,
- einer oder mehreren Ampeln, und
- einer oder mehreren Verkehrszonen in der Bergbauumgebung (100), wobei jede der einen oder der mehreren jeweiligen Verkehrszonen Informationen über eine oder mehrere Verkehrsregeln und/oder einen oder mehrere Straßenbedingungen für einen jeweiligen Bereich in der Bergbauumgebung (100) umfasst.

10. Verfahren nach einem der Ansprüche 1-9, wobei die dynamischen Verkehrsinformationen einen jeweiligen Status des einen oder der mehreren dynamischen Objekte (31, 32, 33, 34) in der Bergbauumgebung (100) angeben.

11. Verfahren nach einem der Ansprüche 1-10, wobei das Erhalten der Positionsinformationen Erhalten von Infrastrukturinformationen umfasst, wobei die Infrastrukturinformationen eine jeweilige Position von Infrastrukturobjekten in der Bergbauumgebung (100) angeben.

12. Verfahren nach einem der Ansprüche 1-11, wobei das Erhalten der Positionsinformation weiter Erhalten von einer Fahrtrichtung des ersten Fahrzeugs (20) in der Bergbauumgebung (100) umfasst, und wobei das Erstellen der zusammengeführten Darstellung (10) weiter auf der erhaltenen Fahrtrichtung basiert.

13. Verfahren nach einem der Ansprüche 1-12, wobei das Erhalten der Positionsinformationen Erhalten der Geolokalisierungsdarstellung aus einem Speicher oder von dem Server (41) umfasst, und wobei die Geolokalisierungsdarstellung statische Informationen einer räumlichen Anordnung der Bergbauumgebung (100) umfasst.

14. Steuerknoten, der dazu konfiguriert ist, beim Steuern eines ersten Fahrzeugs (20) in einer Bergbauumgebung (100) zu unterstützen, wobei der Steuerknoten weiter konfiguriert ist zum:
- Erhalten von Positionsinformationen, wobei die Positionsinformationen eine Geolokalisierungsdarstellung der Bergbauumgebung (100) und eine Position des ersten Fahrzeugs (20) in der Bergbauumgebung (100) umfassen;
- basierend auf der erhaltenen Position des ersten Fahrzeugs (20), Erhalten von dynamischen Verkehrsinformationen von einem Server (41), wobei die dynamischen Verkehrsinformationen jeweilige Positionen eines oder mehrerer dynamischer Objekte (31, 32, 33, 34) angeben, wobei das eine oder die mehreren dynamischen Objekte ein oder mehrere andere Fahrzeuge (33, 34) in der Bergbauumgebung (100) umfassen, und wobei der Server ein Verkehrsverwaltungssystem umfasst, das Positionen des ersten Fahrzeugs (20) und des einen oder der mehreren anderen Fahrzeuge (33, 34) handhabt;
- Erhalten von Sensordaten von einem oder mehreren Sensoren (21a, 21b), die dem ersten Fahrzeug (20) zugeordnet sind;
- basierend auf den erhaltenen Positionsinformationen, den erhaltenen dynamischen Verkehrsinformationen und den erhaltenen Sensordaten, Erstellen einer zusammengeführten Darstellung (10) der Bergbauumgebung (100), wobei die zusammengeführte Darstellung (10) der Bergbauumgebung (100) kontinuierliche Unterstützung zum Steuern des ersten Fahrzeugs (20) in der Bergbauumgebung (100) bereitstellt, indem sie umfasst:
- mindestens einen Teil der erhaltenen Sensordaten,
- eine jeweilige Position eines oder mehrerer anderer Fahrzeuge (,33, 34), wenn sie in einem Bereich der Bergbauumgebung (100) anwesend sind,
- mindestens einen Teil der Geolokalisierungsdarstellung der Bergbauumgebung (100) und die Position des ersten Fahrzeugs (20) in der Bergbauumgebung (100), und
- eine Angabe mindestens einer Fahrzeugroute (35) in der Bergbauumgebung.

15. Computerprogramm (580), das Anweisungen umfasst, die bei Ausführung durch einen Prozessor den Prozessor (560) dazu veranlassen, Handlungen nach einem der Ansprüche 1-13 durchzuführen.

## Revendications

1. Procédé pour commande assistée d'un premier véhicule (20) dans un environnement minier (100), le procédé comprenant :
- l'obtention (301) d'informations de positionnement, dans lequel les informations de positionnement comprennent une représentation de géolocalisation de l'environnement minier (100) et une position du premier véhicule (20) dans l'environnement minier (100) ;
- sur la base de la position obtenue du premier véhicule (20), l'obtention (302) d'informations dynamiques de trafic à partir d'un serveur (41), dans lequel les informations dynamiques de trafic indiquent des positions respectives d'un ou de plusieurs objets dynamiques (31, 32, 33, 34), dans lequel le un ou les plusieurs objets dynamiques comprennent un ou plusieurs autres véhicules (33, 34) dans l'environnement minier (100), et dans lequel le serveur comprend un système de gestion de trafic qui gère des positions du premier véhicule (20) et du un ou des plusieurs autres véhicules (33, 34) ;
- l'obtention (303) de données de capteur à partir d'un ou de plusieurs capteurs (21a, 21b) associés au premier véhicule (20) ;
- sur la base des informations de positionnement obtenues, des informations dynamiques de trafic obtenues et des données de capteur obtenues, la production (304) d'une représentation fusionnée (10) de l'environnement minier (100), dans lequel la représentation fusionnée (10) fournit une assistance continue pour la commande du premier véhicule (20) dans l'environnement minier (100) en comprenant :
- au moins une partie des données de capteur obtenues,
- une position respective du un ou des plusieurs autres véhicules (33, 34) lorsqu'ils sont présents dans une zone de l'environnement minier (100),
- au moins une partie de la représentation de géolocalisation de l'environnement minier (100) et la position du premier véhicule (20) dans l'environnement minier (100), et
- une indication d'au moins un itinéraire de véhicule (35) dans l'environnement minier.

2. Procédé selon la revendication 1, comprenant en outre :
- la fourniture (305) de la représentation fusionnée (10) de l'environnement minier (100) à un premier poste opérateur distant (60), dans lequel le premier poste opérateur distant est agencé de manière à commander à distance le premier véhicule (20) dans l'environnement minier (100) sur la base de l'assistance continue fournie par la représentation fusionnée (10).

3. Procédé selon la revendication 2 comprenant en outre :
- l'obtention (306) d'une ou de plusieurs entrées de commande à partir du premier poste opérateur distant (60), dans lequel la une ou les plusieurs entrées de commande permettent de commander à distance le premier véhicule (20) dans l'environnement minier (100) ; et
- sur la base de la une ou des plusieurs entrées de commande, le déclenchement (307) d'une ou de plusieurs opérations à effectuer par le premier véhicule (20) dans l'environnement minier (100).

4. Procédé selon l'une quelconque des revendications 1 à 3, dans lequel la production de la représentation fusionnée (10) comprend en outre :
- sur la base des données de capteur obtenues, l'estimation d'une ou de plusieurs distances par rapport à une ou plusieurs parois (42a, 42b, 42c, 42d) entourant le premier véhicule (20) dans l'environnement minier (100) ;
- sur la base de la position du premier véhicule (20) dans l'environnement minier (100) et de la une ou des plusieurs distances estimées par rapport à la une ou aux plusieurs parois (42a, 42b, 42c, 42d) entourant le premier véhicule (20) dans l'environnement minier (100), la détermination d'une ou de plusieurs positions de la une ou des plusieurs parois (42a, 42b, 42c, 42d) entourant le premier véhicule (20) dans l'environnement minier (100) ; et
dans lequel la représentation fusionnée (10) est produite pour comprendre la une ou les plusieurs positions déterminées de la une ou des plusieurs parois (42a, 42b, 42c, 42d) entourant le premier véhicule (20) dans l'environnement minier (100).

5. Procédé selon l'une quelconque des revendications 1 à 4, dans lequel l'obtention des données de capteur comprend :
- la détermination d'une direction aveugle (71) du premier véhicule (20), dans lequel la direction aveugle (71) du premier véhicule (20) est une direction du premier véhicule (20) dans laquelle le un ou les plusieurs capteurs (21a, 21b) ne sont pas en mesure d'obtenir des données de capteur ; et
- la déduction des données de capteur pour la direction aveugle (71) du premier véhicule (20) sur la base de données de capteur obtenues précédemment.

6. Procédé selon l'une quelconque des revendications 1 à 5, dans lequel la production de la représentation fusionnée (10) comprend en outre :
- la détermination d'au moins une disparité entre les données de capteur obtenues et la représentation de géolocalisation de l'environnement minier (100) ; et
- la présentation de la au moins une disparité déterminée dans la représentation fusionnée (10).

7. Procédé selon la revendication 6, comprenant en outre :
- lorsque la au moins une disparité est supérieure à un seuil, le déclenchement d'une alarme.

8. Procédé selon les revendications 1 à 7, dans lequel l'obtention des données de capteur comprend l'obtention de données de capteur à partir de l'un quelconque ou de plusieurs quelconques des éléments suivants :
- au moins un capteur laser,
- au moins un capteur d'angle d'articulation,
- au moins un capteur de positionnement en réseau, et
- au moins un compteur kilométrique.

9. Procédé selon l'une quelconque des revendications 1 à 8, dans lequel le un ou les plusieurs objets dynamiques (31, 32, 33, 34) comprennent en outre l'un quelconque ou plusieurs quelconques des éléments suivants :
- une ou plusieurs barrières (31, 32),
- un ou plusieurs itinéraires autonomes disponibles dans l'environnement minier (100),
- un ou plusieurs itinéraires actifs dans l'environnement minier (100),
- une ou plusieurs zones de chargement,
- une ou plusieurs zones de déversement,
- un ou plusieurs feux de circulation, et
- une ou plusieurs zones de trafic dans l'environnement minier (100), dans lequel chacune de la une ou des plusieurs zones de trafic respectives comprend des informations sur une ou plusieurs règles de trafic et/ou une ou plusieurs conditions de route pour une zone respective dans l'environnement minier (100).

10. Procédé selon l'une quelconque des revendications 1 à 9, dans lequel les informations dynamiques de trafic indiquent un état respectif du un ou des plusieurs objets dynamiques (31, 32, 33, 34) dans l'environnement minier (100).

11. Procédé selon l'une quelconque des revendications 1 à 10, dans lequel l'obtention des informations de positionnement comprend l'obtention d'informations d'infrastructure, dans lequel les informations d'infrastructure indiquent une position respective des objets d'infrastructure dans l'environnement minier (100).

12. Procédé selon l'une quelconque des revendications 1 à 11, dans lequel l'obtention des informations de positionnement comprend en outre l'obtention d'une direction de déplacement du premier véhicule (20) dans l'environnement minier (100), et dans lequel la production de la représentation fusionnée (10) est en outre basée sur la direction de déplacement obtenue.

13. Procédé selon l'une quelconque des revendications 1 à 12, dans lequel l'obtention des informations de positionnement comprend l'obtention de la représentation de géolocalisation à partir d'une mémoire ou du serveur (41), et dans lequel la représentation de géolocalisation comprend des informations statiques d'une disposition spatiale de l'environnement minier (100).

14. Nœud de commande configuré pour aider à commander un premier véhicule (20) dans un environnement minier (100), le nœud de commande étant en outre configuré pour :
- obtenir des informations de positionnement, dans lequel les informations de positionnement comprennent une représentation de géolocalisation de l'environnement minier (100) et une position du premier véhicule (20) dans l'environnement minier (100) ;
- sur la base de la position obtenue du premier véhicule (20), obtenir des informations dynamiques de trafic à partir d'un serveur (41), dans lequel les informations dynamiques de trafic indiquent des positions respectives d'un ou de plusieurs objets dynamiques (31, 32, 33, 34), dans lequel le un ou les plusieurs objets dynamiques comprennent un ou plusieurs autres véhicules (33, 34) dans l'environnement minier (100), et dans lequel le serveur comprend un système de gestion de trafic qui gère des positions du premier véhicule (20) et du un ou des plusieurs autres véhicules (33, 34) ;
- obtenir des données de capteur à partir d'un ou de plusieurs capteurs (21a, 21b) associés au premier véhicule (20) ;
- sur la base des informations de positionnement obtenues, des informations dynamiques de trafic obtenues et des données de capteur obtenues, produire une représentation fusionnée (10) de l'environnement minier (100), dans lequel la représentation fusionnée (10) de l'environnement minier (100) fournit une assistance continue pour la commande du premier véhicule (20) dans l'environnement minier (100) en comprenant :
- au moins une partie des données de capteur obtenues,
- une position respective du un ou des plusieurs autres véhicules (33, 34) lorsqu'ils sont présents dans une zone de l'environnement minier (100),
- au moins une partie de la représentation de géolocalisation de l'environnement minier (100) et la position du premier véhicule (20) dans l'environnement minier (100), et
- une indication d'au moins un itinéraire de véhicule (35) dans l'environnement minier.

15. Programme informatique (580) comprenant des instructions qui, lorsqu'elles sont exécutées par un processeur, amènent le processeur (560) à effectuer des actions selon l'une quelconque des revendications 1 à 13.
